# EUROPEAN PATENT APPLICATION

(11) **EP 4 521 765 A1**
(43) Date of publication of application: **12.03.2025**
(21) Application number: 23811961.4
(22) Date of filing: 20.03.2023
(51) Int. Cl.: H04N 23/68, H04N 23/54, G03B 13/36, G03B 3/10, G03B 5/04, G03B 17/17, H04N 23/55

(54) **ELECTRONIC DEVICE COMPRISING IMAGE SENSOR AND OPERATING METHOD THEREOF**

(30) Priority: 26.05.2022 KR 20220064933; 23.08.2022 KR 20220105606
(71) Applicant: Samsung Electronics Co., Ltd., Suwon-si, Gyeonggi-do 16677 (KR)
(72) Inventor: YU, Youngbok, Suwon-si, Gyeonggi-do 16677 (KR)
(74) Representative: HGF
(86) International application number: PCT/KR2023/003641
(87) International publication number: WO 2023/229177

(57) **Abstract**

A camera module according to an embodiment of the disclosure may include an image sensor, an optical image stabilization (OIS) carrier coupled to the image sensor to move the image sensor on a plane perpendicular to an optical axis, a housing for accommodating the image sensor and the OIS carrier, an OIS magnet fixed to a first side of the OIS carrier, a first OIS coil and a second OIS coil fixed to a first inner surface of the housing to face the OIS magnet, the first OIS coil and the second OIS coil disposed side by side on the first inner surface along a direction perpendicular to the optical axis, and a driving circuit electrically connected to the first OIS coil and the second OIS coil. The driving circuit may control a first current applied to the first OIS coil and a second current applied to the second OIS coil to perform OIS by moving the image sensor in a direction perpendicular to the optical axis, and to perform roll rotation correction of the image sensor by rotating the image sensor on a plane perpendicular to the optical axis.

## Description

### [Technical Field]

The disclosure relates to a technique for improving image quality by adjusting a position of an image sensor.

### [Background Art]

Recently, as functions of a mobile device are diversified, needs for improvement of an image capture function using the mobile device is also increasing. Accordingly, what is demanded is a technique for improving quality of an image obtained through the mobile device.

An electronic device may include a camera module for performing an optical image stabilization (OIS) function. The electronic device may compensate for shake by moving the lens assembly included in the camera module, or by moving the image sensor through the OIS function. The OIS function may include a sensor shift scheme for moving the image sensor and a lens shift scheme for moving the lens assembly.

### [Disclosure of Invention]

### [Technical Problem]

An electronic device adopting an optical image stabilization (OIS) of a sensor shift scheme performs OIS by moving an image sensor in an x-axis direction and/or a y-axis direction substantially perpendicular to an optical axis (e.g., a z-axis). At this time, while the electronic device performs the OIS by moving the image sensor, the image sensor may rotate around the optical axis, that is, rotate in a roll direction. If the image sensor rotates in the roll direction, image quality may be subject to deterioration such as capturing an image different from a user's intention.

### [Solution to Problem]

A camera module according to an embodiment of the disclosure may include an image sensor, an optical image stabilization (OIS) carrier coupled to the image sensor to move the image sensor on a plane perpendicular to an optical axis, a housing for accommodating the image sensor and the OIS carrier, an OIS magnet fixed to a first side of the OIS carrier, a first OIS coil and a second OIS coil fixed to a first inner surface of the housing to face the OIS magnet, the first OIS coil and the second OIS coil disposed side by side on the first inner surface along a direction perpendicular to the optical axis, and a driving circuit electrically connected to the first OIS coil and the second OIS coil. The driving circuit may control a first current applied to the first OIS coil and a second current applied to the second OIS coil to perform OIS by moving the image sensor in a direction perpendicular to the optical axis, and to perform roll rotation correction of the image sensor by rotating the image sensor on a plane perpendicular to the optical axis.

An electronic device module according to an embodiment of the disclosure may include an image sensor, an OIS carrier coupled to the image sensor to move the image sensor on a plane perpendicular to an optical axis, a housing for accommodating the image sensor and the OIS carrier, an OIS magnet fixed to a first side of the OIS carrier, a first OIS coil and a second OIS coil fixed to a first inner surface of the housing to face the OIS magnet, the first OIS coil and the second OIS coil disposed side by side on the first inner surface along a direction perpendicular to the optical axis, and at least one processor electrically connected to the first OIS coil and the second OIS coil. The at least one processor may control a first current applied to the first OIS coil and a second current applied to the second OIS coil to perform OIS by moving the image sensor in a direction perpendicular to the optical axis, and to perform roll rotation correction of the image sensor by rotating the image sensor on a plane perpendicular to the optical axis.

### [Advantageous Effects of Invention]

According to various embodiments disclosed in this document, while performing optical image stabilization (OIS) by moving an image sensor, an electronic device may also correct a roll direction rotation of the image sensor. Hence, the electronic device may capture/acquire an image with improved quality.

Effects obtainable from the disclosure are not limited to the above-mentioned effects, and other effects which are not mentioned may be clearly understood by those skilled in the art of the disclosure through the following descriptions.

### [Brief Description of Drawings]

FIG. 1 illustrates a camera module mounted in an electronic device according to an embodiment.
FIG. 2 illustrates an exploded perspective view of a camera module according to an embodiment.
FIG. 3 illustrates an exploded perspective view of a camera module according to an embodiment.
FIG. 4 illustrates a part of a hardware configuration included in a camera module according to an embodiment.
FIG. 5 illustrates a part of a hardware configuration included in a camera module according to an embodiment.
FIG. 6 illustrates an image sensor and a printed circuit board (PCB) connected to the image sensor according to an embodiment.
FIG. 7 illustrates a camera module when viewed from an optical axis direction according to an embodiment.
FIG. 8 is a block diagram of an electronic device in a network environment according to various embodiments.
FIG. 9 is a block diagram illustrating a camera module according to various embodiments.

With regard to the description of the drawings, identical or similar reference numerals may be used for identical or similar components.

### [Mode for the Invention]

Hereinafter, various embodiments of the disclosure are described with reference to the attached drawings. However, it is not intended to limit the disclosure to specific embodiments, and should be understood to embrace various modifications, equivalents, and/or alternatives of the embodiments of the disclosure.

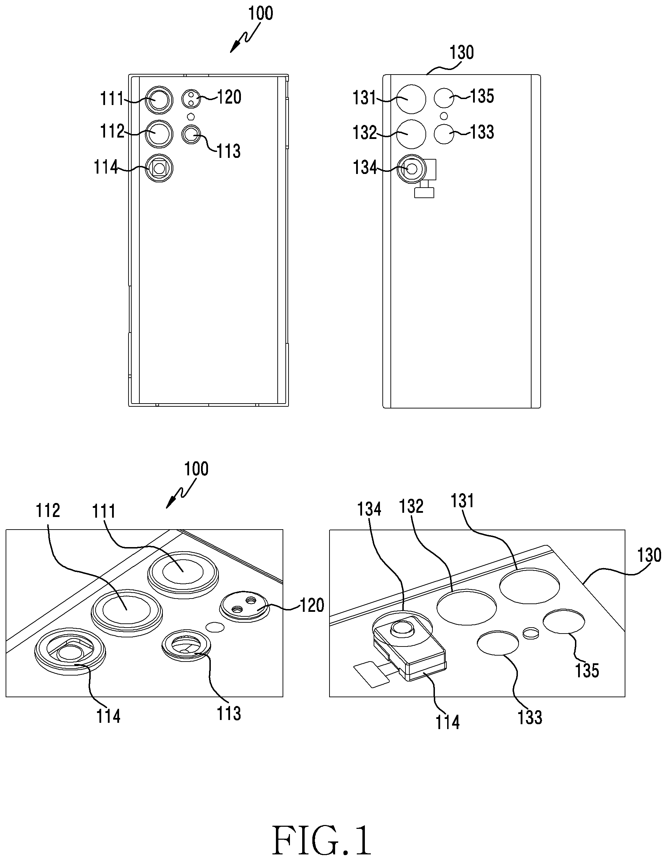

FIG. 1 illustrates a camera module mounted in an electronic device according to an embodiment.

Referring to FIG. 1, an electronic device 100 may include at least one camera module. For example, at least one camera module may be disposed on a rear surface of the electronic device 100 to face the back of the electronic device 100. According to an embodiment, the electronic device 100 may include a first camera module 111, a second camera module 112, a third camera module 113, and a fourth camera module 114. For example, the first camera module 111 is an ultra-wide camera, the second camera module 112 is a wide camera, and the third camera module 113 and the fourth camera module 114 may be tele cameras. For example, the third camera module 113 may be a 3x zoom camera, and the fourth camera module 114 may be a 10x zoom camera. According to an embodiment, the electronic device 100 may further include a distance sensor 120. However, the type or the number of the camera modules illustrated in FIG. 1 are one example, and do not limit the scope of the disclosure.

According to an embodiment, a rear cover 130 of the electronic device 100 may include at least one opening. For example, the rear cover 130 of the electronic device 100 may include a first opening 131 corresponding to the first camera module 111, a second opening 132 corresponding to the second camera module 112, a third opening 133 corresponding to the third camera module 113, and a fourth opening 134 corresponding to the fourth camera module 114. The rear cover 130 of the electronic device 100 may further include an opening 135 corresponding to the distance sensor 120. According to an embodiment, the fourth camera module 114 may obtain an image corresponding to light passing through the fourth opening 134.

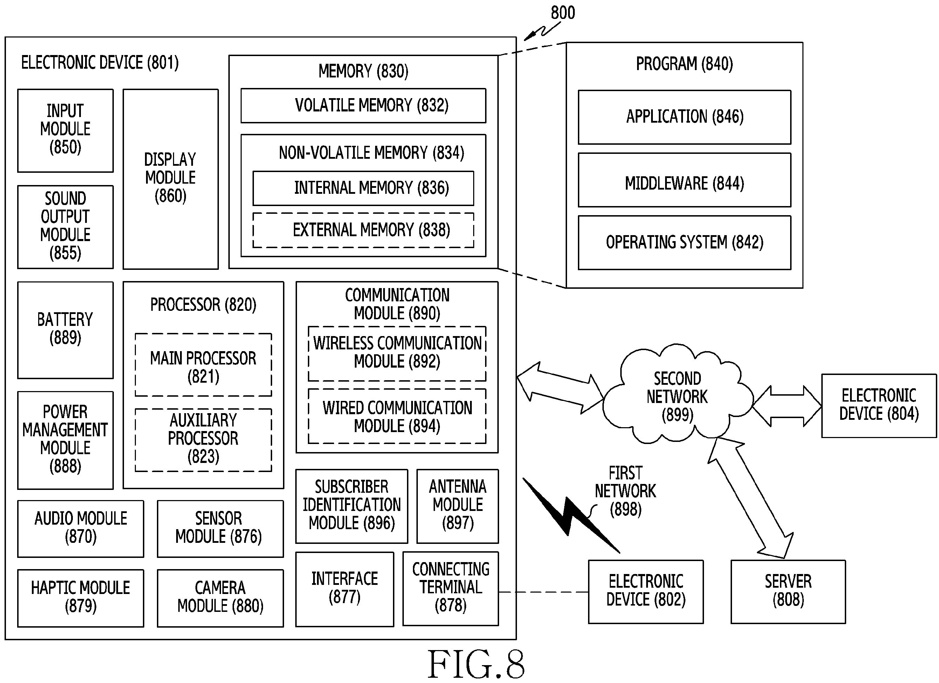

According to an embodiment, the electronic device 100 may include a processor (e.g., a processor 820 of FIG. 8) electrically connected to the camera module (e.g., the first camera module 111, the second camera module 112, the third camera module 113, and the fourth camera module 114). In the disclosure, at least some of operations described as being performed by the camera module may be understood as being performed by the processor of the electronic device 100. In addition, at least some of operations described as being performed by the processor of the electronic device 100 may be understood as being performed by the camera module (e.g., the camera module 880 of FIG. 8) in the disclosure.

Referring to FIG. 1, the electronic device 100 is illustrated as including the four camera modules, which is only an example and does not limit the scope of the disclosure. For example, embodiments of the disclosure may be applied to an electronic device including one camera module, embodiments of the disclosure may be applied to an electronic device including a plurality of camera modules, and embodiments of the disclosure may be applied to some or all of the camera modules included in the electronic device.

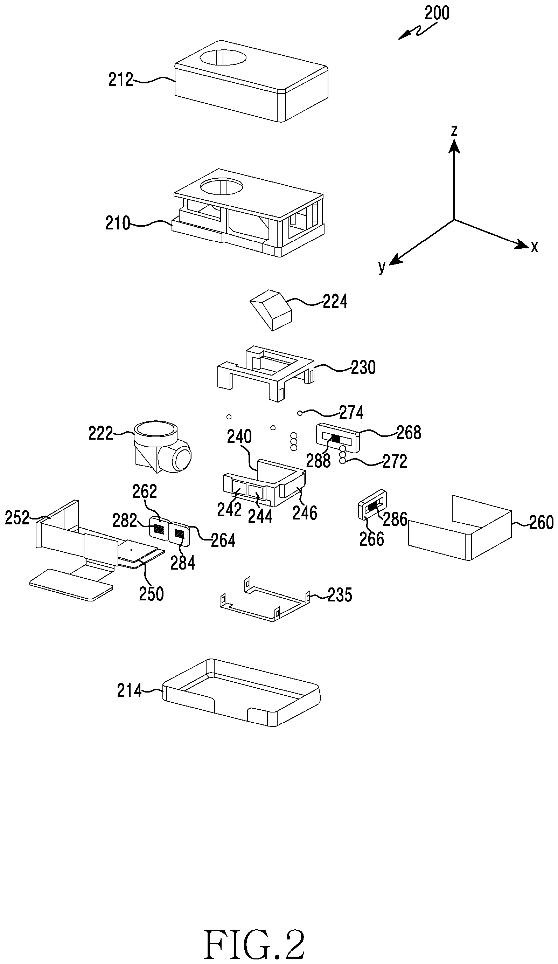

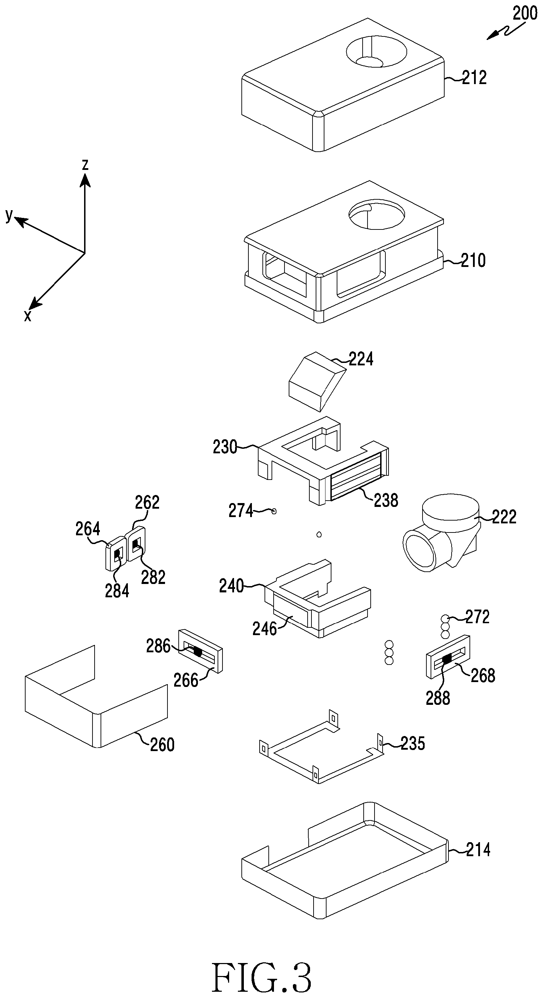

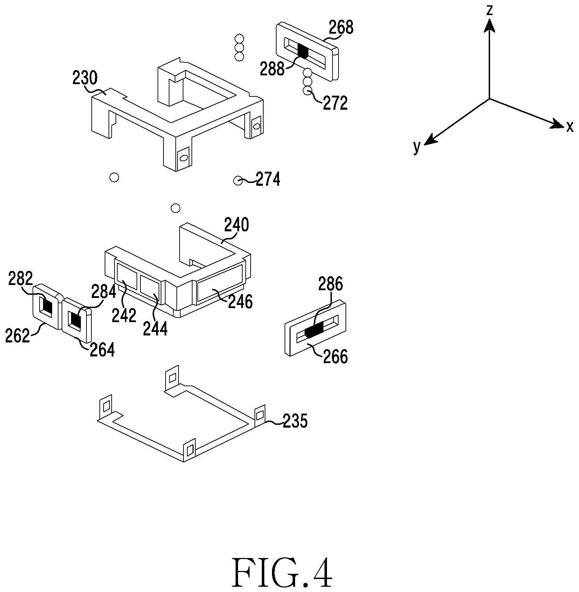

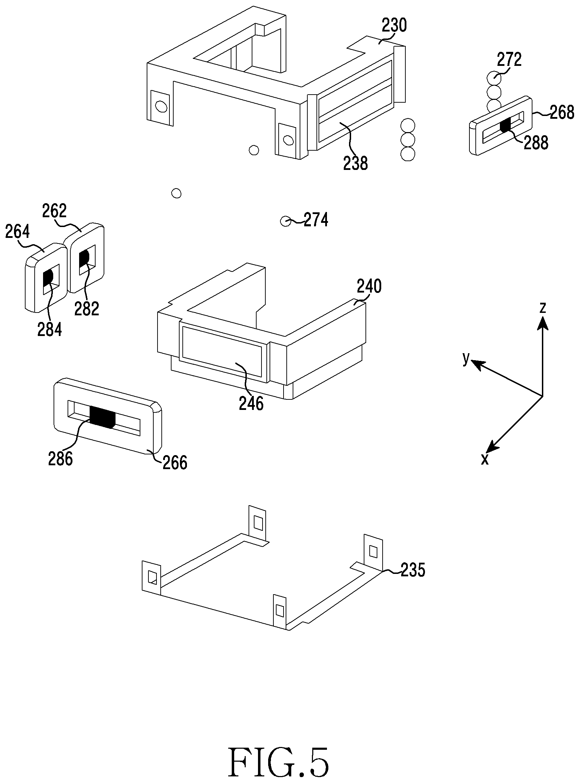

FIG. 2 illustrates an exploded perspective view of a camera module according to an embodiment. FIG. 3 illustrates an exploded perspective view of a camera module according to an embodiment. FIG. 4 illustrates a part of a hardware configuration included in a camera module according to an embodiment. FIG. 5 illustrates a part of a hardware configuration included in a camera module according to an embodiment. FIG. 2 through FIG. 5 illustrate configurations included in a camera module 200 according to an embodiment. The camera module 200 shown in FIG. 2 through FIG. 5 may correspond to the fourth camera module 114 of FIG. 1, or may correspond to at least one of the first camera module 111, the second camera module 112, or the third camera module 113.

Referring to FIG. 2 through FIG. 5, the camera module 200 may include an image sensor 250, an optical image stabilization (OIS) carrier 240, and a housing 210. According to an embodiment, the camera module 200 may further include an upper shield can 212, a lower shield can 214, a lens 222, a prism 224, an auto focus (AF) carrier 230, and a flexible printed circuit board (FPCB) 260.

According to an embodiment, the camera module 200 may include the lens 222 and the prism 224. In an embodiment, the lens 222 may be referred to as a first reflector, and the prism 224 may be referred to as a second reflector. According to an embodiment, the lens 222 and the prism 224 may be securely disposed in the housing 210.

According to an embodiment, the lens 222 may include a structure which refracts light incident in the -z direction by about 90 degrees. According to an embodiment, the lens 222 (the first reflector) may change light incident on the camera module 200 to a second optical axis (e.g., the x-axis) to make it substantially parallel to a first optical axis (e.g., the z-axis). For example, the light incident on the camera module 200 in the -z direction may travel in the +x direction while passing through the lens 222.

According to an embodiment, the prism 224 (the second reflector) may change the light reflected to the second optical axis (e.g., the x-axis) back to the first optical axis (e.g., the z-axis). For example, the prism 224 may refract the light traveling in the +x direction by about 90 degrees. The light traveling in the +x direction as passing through the lens 222 may be refracted again by the prism 224 to travel in the -z direction. In the disclosure, the 'optical axis' may indicate the first optical axis, that is, the z-axis, or may indicate an axis substantially parallel to the z-axis.

According to FIG. 2 through FIG. 5, the camera module 200 is illustrated as a folded-type camera module in which the incident light is refracted twice but this is only an example, and various other embodiments are possible. For example, embodiments of the disclosure may be applied to a folded-type camera module in which the incident light is refracted once through one reflector, or a direct-type camera module in which the incident light enters the image sensor 250 without being refracted.

According to an embodiment, the camera module 200 may include the image sensor 250. In an embodiment, the image sensor 250 may be a complementary metal oxide semiconductor (CMOS) sensor or a charged coupled device (CCD) sensor. A plurality of individual pixels may be integrated in the image sensor 250, and each individual pixel may include a micro lens, a color filter, and a photodiode. Each individual pixel is a type of a light detector and may convert the inputted light into an electrical signal. For example, a light receiving element of the image sensor 250 may generate a current by generating a photoelectric effect using light received through the lens 222, and amplify the generated current. For example, each individual pixel may include a photoelectric transformation element (or a position sensitive detector (PSD)) and a plurality of transistors (e.g., a reset transistor, a transfer transistor, a select transistor, a driver transistor).

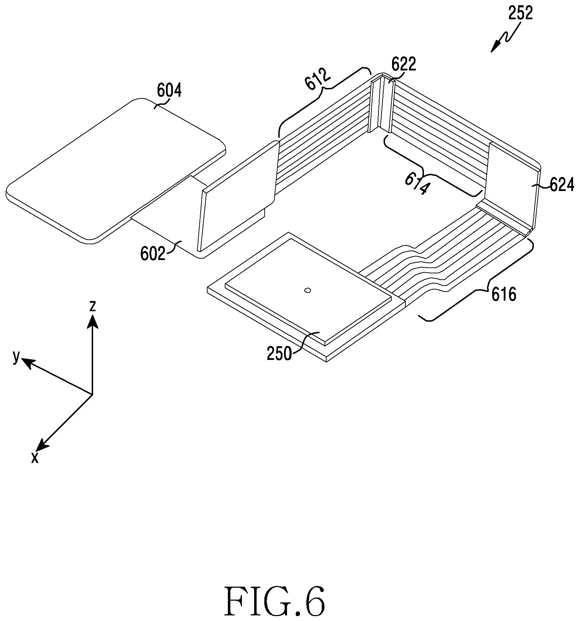

According to an embodiment, the image sensor 250 may be disposed on a sensor PCB 252. For example, the image sensor 250 may be electrically connected to the sensor PCB 252. In addition, the image sensor 250 may be coupled and disposed in a specific portion of the sensor PCB 252. Regarding the sensor PCB 252, it shall be described with reference to FIG. 6.

According to an embodiment, the image sensor 250 may be disposed to move within the housing 210. According to an embodiment, the image sensor 250 may be moved on a two-dimensional plane substantially perpendicular to the optical axis (e.g., the z-axis). The electronic device 100 (or the camera module 200) may move the image sensor 250 to perform the OIS function. For example, the electronic device 100 (or the camera module 200) may move the image sensor 250 in a direction (e.g., a +x/-x direction, or a +y/-y direction) substantially perpendicular to the optical axis to compensate for shake of the electronic device 100. According to an embodiment, the image sensor 250 may be moved in a direction substantially parallel to the optical axis (e.g., the z-axis). The electronic device 100 (or the camera module 200) may move the image sensor 250 to perform the AF function. For example, the electronic device 100 (or the camera module 200) may focus on a subject by moving the image sensor 250 in a direction substantially parallel to the optical axis. However, embodiments of the disclosure may be also applied to a camera module which performs the AF function by moving the lens, and performs the OIS by moving the image sensor.

According to an embodiment, the camera module 200 may include the OIS carrier 240 which is coupled to the image sensor 250 to move the image sensor 250 on a plane (e.g., an xy plane) substantially perpendicular to the optical axis (e.g., the z-axis). For example, the OIS carrier 240 may be attached to the sensor PCB 252 and configured to move together with the image sensor 250.

According to an embodiment, the camera module 200 may include the AF carrier 230 for moving the image sensor 250 in a direction substantially parallel to the optical axis (e.g., the z-axis). According to an embodiment, the AF carrier 230 may accommodate the OIS carrier 240. For example, as the AF carrier 230 moves in the direction substantially parallel to the optical axis, the image sensor 250 may also move in the direction substantially parallel to the optical axis. In addition, if the OIS carrier 240 moves within the AF carrier 230 in the direction substantially perpendicular to the optical axis, the image sensor 250 may move together with the OIS carrier 240 in the direction substantially perpendicular to the optical axis.

According to an embodiment, the camera module 200 may include a stopper 235 coupled to the AF carrier 230. The stopper 235 may prevent the OIS carrier 240 accommodated inside the AF carrier 230 from moving out of the AF carrier 230. For example, the stopper 235 may prevent the OIS carrier 240 from moving in the optical axis (e.g., the z-axis) direction with respect to the AF carrier 230.

According to an embodiment, the camera module 200 may include the housing 210 for accommodating the image sensor 250 and the AF carrier 230. The housing 210 may accommodate the lens 222, the prism 224, the image sensor 250, the OIS carrier 240, and the AF carrier 230. According to an embodiment, the camera module 200 may include the upper shield can 212 and the lower shield can 214 disposed outside the housing 210. The upper shield can 212 and the lower shield can 214 may form an exterior of the camera module 200. According to an embodiment, the camera module 200 may include the FPCB 260 secured to the housing 210. A driving circuit of the camera module 200 may be disposed on the FPCB 260.

According to an embodiment, the camera module 200 may include an AF magnet 238 fixed to an outer side (e.g., a side facing the -y direction) of the AF carrier 230. In addition, the camera module 200 may include an AF coil 268 fixed to one surface (e.g., an inner surface facing the +y direction) of inner surfaces of the housing 210. For example, the AF coil 268 may be disposed on the FPCB 260. According to an embodiment, the driving circuit of the camera module 200 may control the current applied to the AF coil 268 to thus move the AF carrier 230 in a direction substantially parallel to the optical axis (e.g., the z-axis). For example, the driving circuit of the camera module 200 may perform the AF function by controlling the current applied to the AF coil 268 to move the image sensor 250 in the optical axis direction.

According to an embodiment, the camera module 200 may include an AF position sensor 288 for detecting a position of the AF carrier 230. The AF position sensor 288 may be disposed around the AF coil 268. For example, the AF position sensor 288 may be disposed in an inner hole of the AF coil 268. According to an embodiment, the driving circuit of the camera module 200 may detect the position of the AF magnet 238 through the AF position sensor 288, and identify the position of the image sensor 250 on the optical axis based on the position of the AF magnet 238.

According to an embodiment, the camera module 200 may include an AF ball group 272. The AF ball group 272 may be disposed between the housing 210 and the AF carrier 230. If the camera module 200 performs the AF function, the AF carrier 230 may be smoothly moved in the optical axis direction by the AF ball group 272.

According to an embodiment, the camera module 200 may include an x-axis OIS magnet 246 fixed to one (e.g., a side facing the +x direction) of outer surfaces of the OIS carrier 240. In addition, the camera module 200 may include an x-axis OIS coil 266 fixed to one (e.g., an inner surface facing the -x direction) of the inner surfaces of the housing 210. For example, the x-axis OIS coil 266 may be disposed on the FPCB 260. According to an embodiment, the driving circuit of the camera module 200 may control the current applied to the x-axis OIS coil 266 to thus move the OIS carrier 240 in a direction (e.g., the +x/-x direction) substantially perpendicular to the optical axis (e.g., the z-axis). For example, the driving circuit of the camera module 200 may perform the OIS function by controlling the current applied to the x-axis OIS coil 266 to move the image sensor 250 in the direction (e.g., the +x/-x direction) substantially perpendicular to the optical axis.

According to an embodiment, the camera module 200 may include an x-axis OIS position sensor 286 for detecting the position of the OIS carrier 240 on the x-axis. The x-axis OIS position sensor 286 may be disposed around the x-axis OIS coil 266. For example, the x-axis OIS position sensor 286 may be disposed in an inner hole of the x-axis OIS coil 266. According to an embodiment, the driving circuit of the camera module 200 may detect a position of the x-axis OIS magnet 246 through the x-axis OIS position sensor 286, and identify the position of the image sensor 250 on the x-axis based on the position of the x-axis OIS magnet 246. FIG. 2 through FIG. 5 illustrates the x-axis OIS magnet 246 is one in number, but the number of the x-axis OIS magnets 246 is not limited thereto. According to an embodiment, the number of the x-axis OIS magnets 246 may be two or more. For example, the x-axis OIS magnet may include two magnets such as y-axis OIS magnets 242 and 244. According to an embodiment, the x-axis OIS magnet may include a first x-axis OIS magnet and a second x-axis OIS magnet. According to an embodiment, the first x-axis OIS magnet and the second x-axis OIS magnet may correspond to different polarities. For example, the first x-axis OIS magnet may correspond to the N pole, and the second x-axis OIS magnet may correspond to the S pole. For example, the first x-axis OIS magnet may correspond to the S pole, and the second x-axis OIS magnet may correspond to the N pole. According to an embodiment, the first OIS x-axis magnet and the second x-axis OIS magnet may correspond to the same polarity. For example, both the first x-axis OIS magnet and the second x-axis OIS magnet may be the N pole, or both the first x-axis OIS magnet and the second x-axis OIS magnet may be the S pole.

According to an embodiment, the camera module 200 may include the y-axis OIS magnets 242 and 244 fixed to another surface (hereafter, a first side) (e.g., a side facing the +y direction) of the outer surface of the OIS carrier 240. For example, the first OIS magnet 242 and the second OIS magnet 422 may be disposed on the first side of the OIS carrier 240. For example, unlike the illustration in FIG. 2 through FIG. 5, an OIS magnet formed with one magnet may be disposed. According to an embodiment, the first OIS magnet 242 and the second OIS magnet 244 may correspond to different polarities. For example, the first OIS magnet 242 may correspond to the N pole, and the second OIS magnet 244 may correspond to the S pole. For example, the first OIS magnet 242 may correspond to the S pole, and the second OIS magnet 244 may correspond to the N pole. According to an embodiment, the first OIS magnet 242 and the second OIS magnet 244 may correspond to the same polarity. For example, both the first OIS magnet 242 and the second OIS magnet 244 may be the N pole, or both the first OIS magnet 242 and the second OIS magnet 244 may be the S pole.

According to an embodiment, the camera module 200 may include a first OIS coil 262 and a second OIS coil 264 fixed to another surface (hereafter, a first inner surface) (e.g., an inner surface facing the -y direction) of the inner surfaces of the housing 210. According to an embodiment, the first OIS coil 262 and the second OIS coil 264 may be arranged side by side along a direction (e.g., the x-axis direction) substantially perpendicular to the optical axis on the first inner surface.

According to an embodiment, the driving circuit of the camera module 200 may control a first current applied to the first OIS coil 262 and a second current applied to the second OIS coil 264, and thus move the OIS carrier 240 in a direction (e.g., a +y/-y direction) substantially perpendicular to the optical axis (e.g., the z-axis). For example, the driving circuit of the camera module 200 may perform the OIS function by controlling the first current applied to the first OIS coil 262 and the second current applied to the second OIS coil 264 to move the image sensor 250 in the direction (e.g., the +y/-y direction) substantially perpendicular to the optical axis.

According to an embodiment, the camera module 200 may include a first OIS position sensor 282 and a second OIS position sensor 284 for detecting the position of the OIS carrier 240 on the y-axis. The first OIS position sensor 282 and the second OIS position sensor 284 may be disposed around the first OIS coil 262 and the second OIS coil 264 respectively. For example, the first OIS position sensor 282 and the second OIS position sensor 284 may be disposed in inner holes of the first OIS coil 262 and the second OIS coil 264 respectively. According to an embodiment, the driving circuit of the camera module 200 may detect positions of the first OIS magnet 242 and the second OIS magnet 244 through the first OIS position sensor 282 and the second OIS position sensor 284, and identify the position of the image sensor 250 on the y-axis based on the positions.

According to an embodiment, the camera module 200 may include an OIS ball group 274. The OIS ball group 274 may be disposed between the AF carrier 230 and the OIS carrier 240. If the camera module 200 performs the OIS function, the OIS carrier 240 may be smoothly moved within the AF carrier 230 by the OIS ball group 274 in a direction substantially perpendicular to the optical axis.

According to an embodiment, while the camera module 200 performs the OIS by moving the image sensor 250, a rotation in the roll direction in which the image sensor 250 rotates around the optical axis may occur. Since the quality of the image captured through the camera module 200 may deteriorate if the image sensor 250 rotates in the roll direction, the camera module 200 (or the electronic device 100) of the disclosure may perform roll rotation correction of the image sensor 250. For example, the camera module 200 of the disclosure may perform the roll rotation correction of the image sensor 250, using the OIS magnets (e.g., the first OIS magnet 242 and the second OIS magnet 242) disposed on the first side (e.g., the side facing the +y direction) of the OIS carrier 240, and the first OIS coil 262 and the second OIS coil 264 disposed on the first inner surface (e.g., the inner surface facing the +y direction) of the housing 210. In the disclosure, 'roll rotation correction' may indicate correcting the position of the image sensor 250 by rotating the image sensor 250 in an opposite direction if the image sensor 250 rotates in the roll direction. In the disclosure, 'roll rotation correction' may be an operation included in the OIS operation of the camera module. For example, 'roll rotation correction' may be a kind of the OIS operation in the disclosure.

According to an embodiment, the driving circuit of the camera module 200 may control the first current applied to the first OIS coil 262 and the second current applied to the second OIS coil 264, to thus rotate the OIS carrier 240 on a plane substantially perpendicular to the optical axis (e.g., z). For example, the driving circuit of the camera module 200 may perform the roll rotation correction of the image sensor 250, by controlling the first current applied to the first OIS coil 262 and the second current applied to the second OIS coil 264 to rotate the image sensor 250 on the plane substantially perpendicular to the optical axis.

According to an embodiment, the driving circuit of the camera module 200 may control the first current applied to the first OIS coil 262 and the second current applied to the second OIS coil 264, and thus control electromagnetic forces exerted to the first OIS magnet 242 and the second OIS magnet 244 to point the same direction, or control them to point opposite directions.

For example, if the first OIS magnet 242 and the second OIS magnet 244 correspond to the same polarity (e.g., the N pole), and the driving circuit applies a current of the same direction to the first OIS coil 262 and the second OIS coil 264, the OIS carrier 240 may move in the +y or -y direction. In addition, if the first OIS magnet 242 and the second OIS magnet 244 correspond to the same polarity (e.g., the N pole), and the driving circuit applies currents of different directions to the first OIS coil 262 and the second OIS coil 264, the OIS carrier 240 may rotate clockwise or counterclockwise around the optical axis.

For example, if the first OIS magnet 242 and the second OIS magnet 244 correspond to different polarities, and the driving circuit applies currents of different directions to the first OIS coil 262 and the second OIS coil 264, the OIS carrier 240 may move in the +y or -y direction. In addition, the first OIS magnet 242 and the second OIS magnet 244 correspond to different polarities, and the driving circuit applies a current of the same direction to the first OIS coil 262 and the second OIS coil 264, the OIS carrier 240 may rotate clockwise or counterclockwise around the optical axis.

According to an embodiment, by controlling the currents applied to the first OIS coil 262 and the second OIS coil 264, the electronic device 100 (or the camera module 200) may perform the OIS by moving the image sensor 250 in a direction substantially perpendicular to the optical axis, and perform the roll rotation correction of the image sensor 250 by rotating the image sensor 250 on a plane substantially perpendicular to the optical axis..

FIG. 6 illustrates an image sensor and a PCB connected to the image sensor according to an embodiment.

According to an embodiment, the sensor PCB 252 may include a fixed portion 602, a movable portion 612, 614, and 616, and stiffeners 622 and 624. Additionally, the sensor PCB 252 may include a connector 604 connected to outside. According to an embodiment, the image sensor 250 may be disposed in a specific portion of the sensor PCB 252.

According to an embodiment, the fixed portion 602 of the sensor PCB 252 may be secured to the housing 210 of the camera module 200. The connector 604 of the sensor PCB 252 may be connected to the processor (e.g., an image signal processor (ISP), an application processor (AP)) included in the electronic device 100.

According to an embodiment, the movable portion of the sensor PCB 252 may include the first portion 612, the second portion 614, and the third portion 616. As the first portion 612 flexibly moves or shakes, the image sensor 250 may move in the y-axis direction. As the second portion 614 flexibly moves or shakes, the image sensor 250 may move in the x-axis direction. As the third portion 616 flexibly moves or shakes, the image sensor 250 may move in the z-axis direction. According to an embodiment, since the sensor PCB 252 includes the first portion 612, the second portion 614, and the third portion 616 which may be flexibly shaken, the camera module 200 may perform the sensor shift AF and the sensor shift OIS using the movement of the image sensor 250.

According to an embodiment, the sensor PCB 252 may include the first stiffener 622 and the second stiffener 624. The first stiffener 622 may be disposed between the first portion 612 and the second portion 614, and the second stiffener 624 may be disposed between the second portion 614 and the third portion 616. The sensor PCB 252 may be shaken in the x, y, and z axes, and maintain a stable form by means of the first stiffener 622 and the second stiffener 624.

Referring to FIG. 6, the image sensor 250 is illustrated as being disposed on the sensor PCB 252 which may be shaken in three axes, but this is only an example, and various other embodiments are possible. For example, in a camera module which performs the AF using the lens shift scheme and performs the OIS using the sensor shift scheme, the movable portion included in the sensor PCB may be configured in only two axes.

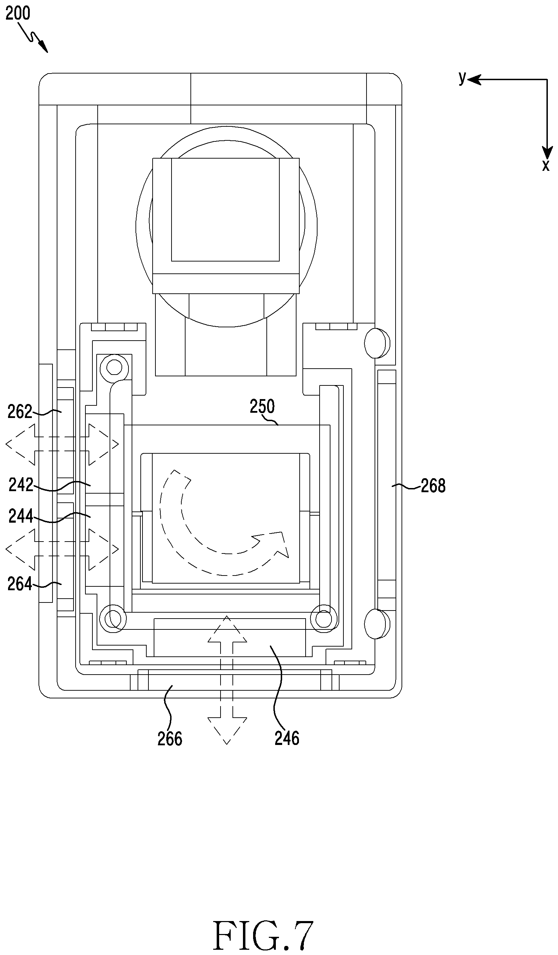

FIG. 7 illustrates a camera module when viewed from an optical axis direction according to an embodiment.

According to an embodiment, the camera module 200 may control the current applied to the AF coil 268 to move the image sensor 250 in a direction substantially parallel to the optical axis. The camera module 200 may perform the AF function by moving the image sensor 250 in the direction substantially parallel to the optical axis.

According to an embodiment, the camera module 200 may control the current applied to the x-axis OIS coil 266 to move the image sensor 250 in a direction (e.g., the +x/-x direction) substantially perpendicular to the optical axis. For example, the driving circuit of the camera module 200 may control the current applied to the x-axis OIS coil 266, and the OIS carrier 240 may be moved by electromagnetic interaction between the x-axis OIS coil 266 and the x-axis OIS magnet 246 in the direction (e.g., the +x/-x direction) substantially perpendicular to the optical axis. The driving circuit may perform the OIS by moving the OIS carrier 240 and the image sensor 250 in the direction (e.g., the +x/-x direction) substantially perpendicular to the optical axis.

According to an embodiment, the camera module 200 may control the current applied to the first OIS coil 262 and the second OIS coil 264 to move the image sensor 250 on a plane substantially perpendicular to the optical axis (e.g., the z-axis). For example, the driving circuit of the camera module 200 may control the currents applied to the first OIS coil 262 and the second OIS coil 264, and the OIS carrier 240 may be moved by electromagnetic interaction between the first OIS coil 262 and the first OIS magnet 242 and electromagnetic interaction between the second OIS coil 264 and the second OIS magnet 244 on the plane substantially perpendicular to the optical axis.

According to an embodiment, the driving circuit of the camera module 200 may control the first current applied to the first OIS coil 262 and the second current applied to the second OIS coil 264, and thus perform the OIS by moving the image sensor 250 in a direction (e.g., the +y/-y direction) substantially perpendicular to the optical axis. In addition, the driving circuit of the camera module 200 may control the first current applied to the first OIS coil 262 and the second current applied to the second OIS coil 264, and thus perform the roll rotation correction of the image sensor 250 by rotating the image sensor 250 on a plane (e.g., an xy plane) substantially perpendicular to the optical axis.

Referring to FIG. 4 and FIG. 7, the electronic device 100 (or the camera module 200) may perform the OIS and/or the roll rotation correction using result values of the first OIS position sensor 282 and the second OIS position sensor 284.

According to an embodiment, the camera module 200 may perform the OIS using a sum or average value of a first sensing value of the first OIS position sensor 282 and a second sensing value of the second OIS position sensor 284. The camera module 200 may identify the position of the image sensor 250 on the y-axis based on the sum value of the first sensing value and the second sensing value, or the average value of the first sensing value and the second sensing value, and perform the OIS based on the position of the image sensor 250 on the y-axis.

According to an embodiment, the camera module 200 may perform the roll rotation correction using a difference of the first sensing value of the first OIS position sensor 282 and the second sensing value of the second OIS position sensor 284. The camera module 200 may identify whether the image sensor 250 rotates in the roll direction based on the difference value of the first sensing value and the second sensing value, and perform the roll rotation correction of the image sensor 250 if determining the roll rotation of the image sensor 250. For example, if the difference of the first sensing value and the second sensing value is greater than or equal to a threshold value, the camera module 200 may determine that the roll rotation correction of the image sensor 250 is required.

The camera module (e.g., the first camera module 111) according to an embodiment may include an image sensor (e.g., the image sensor 250), an OIS carrier (e.g., the OIS carrier 240) coupled to the image sensor to move the image sensor on a plane perpendicular to an optical axis, a housing (e.g., the housing 210) for accommodating the image sensor and the OIS carrier, an OIS magnet (e.g., the first OIS magnet 242) fixed to a first side of the OIS carrier, a first OIS coil (e.g., the first OIS coil 262) and a second OIS coil (e.g., the second OIS coil 264) fixed to a first inner surface of the housing to face the OIS magnet, the first OIS coil and the second OIS coil disposed side by side on the first inner surface along a direction perpendicular to the optical axis, and a driving circuit electrically connected to the first OIS coil and the second OIS coil. The driving circuit may control a first current applied to the first OIS coil and a second current applied to the second OIS coil to perform OIS by moving the image sensor in a direction perpendicular to the optical axis, and to perform roll rotation correction of the image sensor by rotating the image sensor on a plane perpendicular to the optical axis.

In the camera module according to an embodiment, the OIS magnet may include a first OIS magnet and a second OIS magnet, the first OIS coil may face the first OIS magnet, and the second OIS coil may face the second OIS magnet.

In the camera module according to an embodiment, the first OIS magnet and the second OIS magnet may correspond to the same polarity, and the driving circuit may perform the OIS by controlling the first current and the second current to point the same direction, and perform the roll rotation correction by controlling the first current and the second current to point opposite directions.

In the camera module according to an embodiment, the first OIS magnet and the second OIS magnet may correspond to different polarities, and the driving circuit may perform the OIS by controlling the first current and the second current to point opposite directions, and perform the roll rotation correction by controlling the first current and the second current to point the same direction.

The camera module according to an embodiment may further include a first OIS position sensor disposed around the first OIS coil, and a second OIS position sensor disposed around the second OIS coil, and the driving circuit may identify a position of the image sensor through at least a part of a first sensing value of the first OIS position sensor and a second sensing value of the second OIS position sensor.

In the camera module according to an embodiment, the driving circuit may perform the OIS using at least one of a sum value of the first sensing value and the second sensing value, or an average value of the first sensing value and the second sensing value.

In the camera module according to an embodiment, the driving circuit may perform the roll rotation correction using a difference value between the first sensing value and the second sensing value.

The camera module according to an embodiment may further include an AF carrier for accommodating the OIS carrier and received in the housing, an AF magnet fixed to a side of the AF carrier, and an AF coil fixed to a second inner surface of the housing to face the AF magnet. The driving circuit may perform AF by controlling a current applied to the AF coil to move the image sensor in a direction parallel to the optical axis.

In the camera module according to an embodiment, the optical axis may be a first optical axis, and may further include a first reflector for changing light incident on the camera module into a second optical axis substantially perpendicular to the first optical axis, to be substantially parallel to the first optical axis, and a second reflector for changing the light changed into the second optical axis to the first optical axis.

In the camera module according to an embodiment, the first reflector and the second reflector may be secured to the housing.

An electronic device module according to an embodiment may include an image sensor, an OIS carrier coupled to the image sensor to move the image sensor on a plane perpendicular to an optical axis, a housing for accommodating the image sensor and the OIS carrier, an OIS magnet fixed to a first side of the OIS carrier, a first OIS coil and a second OIS coil fixed to a first inner surface of the housing to face the OIS magnet, the first OIS coil and the second OIS coil disposed side by side on the first inner surface along a direction perpendicular to the optical axis, and at least one processor electrically connected to the first OIS coil and the second OIS coil. The at least one processor may control a first current applied to the first OIS coil and a second current applied to the second OIS coil to perform OIS by moving the image sensor in a direction perpendicular to the optical axis, and to perform roll rotation correction of the image sensor by rotating the image sensor on a plane perpendicular to the optical axis.

In the electronic device according to an embodiment, the OIS magnet may include a first OIS magnet and a second OIS magnet, the first OIS coil may face the first OIS magnet, and the second OIS coil may face the second OIS magnet.

In the electronic device according to an embodiment, the first OIS magnet and the second OIS magnet may correspond to the same polarity, and the at least one processor may perform the OIS by controlling the first current and the second current to point the same direction, and perform the roll rotation correction by controlling the first current and the second current to point opposite directions.

In the electronic device according to an embodiment, the first OIS magnet and the second OIS magnet may correspond to different polarities, and the at least one processor may perform the OIS by controlling the first current and the second current to point opposite directions, and perform the roll rotation correction by controlling the first current and the second current to point the same direction.

The electronic device according to an embodiment may further include a first OIS position sensor disposed around the first OIS coil, and a second OIS position sensor disposed around the second OIS coil, and the at least one processor may identify a position of the image sensor through at least a part of a first sensing value of the first OIS position sensor and a second sensing value of the second OIS position sensor.

In the electronic device according to an embodiment, the at least one processor may perform the OIS using at least one of a sum value of the first sensing value and the second sensing value, or an average value of the first sensing value and the second sensing value.

In the electronic device according to an embodiment, the at least one processor may perform the roll rotation correction using a difference value between the first sensing value and the second sensing value.

The electronic device according to an embodiment may further include an AF carrier for accommodating the OIS carrier and received in the housing, an AF magnet fixed to a side of the AF carrier, and an AF coil fixed to a second inner surface of the housing to face the AF magnet. The at least one processor may perform AF by controlling a current applied to the AF coil to move the image sensor in a direction parallel to the optical axis.

In the electronic device according to an embodiment, the optical axis may be a first optical axis, and may further include a first reflector for changing light incident on the camera module into a second optical axis substantially perpendicular to the first optical axis, to be substantially parallel to the first optical axis, and a second reflector for changing the light changed into the second optical axis to the first optical axis.

In the electronic device according to an embodiment, the first reflector and the second reflector may be secured to the housing.

FIG. 8 is a block diagram of an electronic device 801 in a network environment 800 according to various embodiments. Referring to FIG. 8, the electronic device 801 in the network environment 800 may communicate with an electronic device 802 over a first network 898 (e.g., a short-range wireless communication network), or may communicate with at least one of an electronic device 804 or a server 808 over a second network 899 (e.g., a long-range wireless communication network). According to an embodiment, the electronic device 801 may communicate with the electronic device 804 via the server 808. According to an embodiment, the electronic device 801 may include a processor 820, a memory 830, an input module 850, an audio output module 855, a display module 860, an audio module 870, a sensor module 876, an interface 877, a connection terminal 878, a haptic module 879, a camera module 880, a power management module 888, a battery 889, a communication module 890, a subscriber identification module 896, or an antenna module 897. In an embodiment, at least one (e.g., the connection terminal 878) of the components may be omitted, or one or more other components may be added, in the electronic device 801. In an embodiment, some (e.g., the sensor module 876, the camera module 880, or the antenna module 897) of the components may be integrated into a single component (e.g., the display module 860).

The processor 820 may, for example, execute software (e.g., a program 840) to thus control at least one other component (e.g., a hardware or software component) of the electronic device 801 coupled to the processor 820, and perform various data processing or computations. According to an embodiment, as at least a part of the data processing or computation, the processor 820 may store a command or data received from other component (e.g., the sensor module 876 or the communication module 890) in a volatile memory 832, process the command or the data stored in the volatile memory 832, and store resulting data in a non-volatile memory 834. According to an embodiment, the processor 820 may include a main processor 821 (e.g., a central processing device or an AP) or an auxiliary processor 823 (e.g., a graphics processing device, a neural processing unit (NPU), an image signal processor, a sensor hub processor, or a communication processor) for operating independently from or in conjunction with it. For example, if the electronic device 801 includes the main processor 821 and the auxiliary processor 823, the auxiliary processor 823 may be configured to use lower power than the main processor 821, or to be specific for a designated function. The auxiliary processor 823 may be implemented as separately from, or as a part of the main processor 821.

The auxiliary processor 823 may control at least some of functions or states related to at least one component (e.g., the display module 860, the sensor module 876, or the communication module 890) of the components of the electronic device 801, for example, instead of the main processor 821 while the main processor 821 is in an inactive (e.g., sleeping) state, or together with the main processor 821 while the main processor 821 is in an active state (e.g., executing an application). According to an embodiment, the auxiliary processor 823 (e.g., an image signaling processor or a communication processor) may be implemented as a part of other component (e.g., the camera module 880 or the communication module 890) functionally related. According to an embodiment, the auxiliary processor 823 (e.g., the NPU) may include a hardware structure specified for artificial intelligence model processing. An artificial intelligence model may be generated through machine learning. Such learning may be performed, for example, by the electronic device 801 where the artificial intelligence is conducted, or via a separate server (e.g., the server 808). A learning algorithm may include, but not limited to, for example, supervised learning, unsupervised learning, semi-supervised learning or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-networks or a combination of two or more of them, but is not limited thereto. The artificial intelligence model may, additionally or alternatively, include a software structure, in addition to the hardware structure.

The memory 830 may store various data used by at least one component (e.g., the processor 820 or the sensor module 876) of the electronic device 801. The data may include, for example, software (e.g., the program 840), and input data or output data for a command related thereto. The memory 830 may include the volatile memory 832 or the non-volatile memory 834.

The program 840 may be stored as software in the memory 830, and may include, for example, an operating system 842, middleware 844 or an application 846.

The input module 850 may receive a command or data to be used by the component (e.g., the processor 820) of the electronic device 801 from outside (e.g., a user) of the electronic device 801. The input module 850 may include, for example, a microphone, a mouse, a keyboard, a key (e.g., a button), or a digital pen (e.g., a stylus pen).

The audio output module 855 may output a sound signal to the outside of the electronic device 801. The audio output module 855 may include, for example, a speaker or a receiver. The speaker may be used for a general use such as multimedia playing or record playing. The receiver may be used to receive an incoming call. According to an embodiment, the receiver may be implemented separately from, or as a part of the speaker.

The display module 860 may visually provide information to the outside (e.g., the user) of the electronic device 801. The display module 860 may include, for example, a display, a hologram device, or a projector and control circuitry for controlling a corresponding device. According to an embodiment, the display module 860 may include a touch sensor configured to detect a touch, or a pressure sensor configured to measure an intensity of a force generated by the touch.

The audio module 870 may convert a sound into an electrical signal, or convert an electrical signal into a sound. According to an embodiment, the audio module 870 may obtain the sound via the input module 850, or output the sound via the audio output module 855, or an external electronic device (e.g., the electronic device 802) (e.g., a speaker or a headphone) directly or wirelessly connected with the electronic device 801.

The sensor module 876 may detect an operation state (e.g., a power or a temperature) of the electronic device 801, or an external environment state (e.g., a user state), and generate an electrical signal or a data value corresponding to the detected state. According to an embodiment, the sensor module 876 may include, for example, a gesture sensor, a gyro sensor, a barometric sensor, a magnetic sensor, an acceleration sensor, a grip sensor, a proximity sensor, a color sensor, an infrared (IR) sensor, a biosensor, a temperature sensor, a humidity sensor, or an illuminance sensor.

The interface 877 may support one or more designated protocols to be used for the electronic device 801 to connect with the external electronic device (e.g., the electronic device 802) directly or wirelessly. According to an embodiment, the interface 877 may include, for example, a high definition multimedia interface (HDMI), a universal serial bus (USB) interface, a secure digital (SD) card interface, or an audio interface.

The connection terminal 878 may include a connector for physically connecting the electronic device 801 with the external electronic device (e.g., the electronic device 802). According to an embodiment, the connection terminal 878 may include, for example, an HDMI connector, a USB connector, an SD card connector, or an audio connector (e.g., a headphone connector).

The haptic module 879 may convert an electrical signal into a mechanical stimulus (e.g., a vibration or a motion) or an electrical stimulus to be recognized by the user through tactile sensation or kinesthetic sensation. According to an embodiment, the haptic module 879 may include, for example, a motor, a piezoelectric element, or an electric stimulator.

The camera module 880 may capture a still image or moving images. According to an embodiment, the camera module 880 may include one or more lenses, image sensors, image signal processors, or flashes.

The power management module 888 may manage power supplied to the electronic device 801. According to an embodiment, the power management module 888 may be implemented as at least a part of, for example, a power management integrated circuit (PMIC).

The battery 889 may supply the power to at least one component of the electronic device 801. According to an embodiment, the battery 889 may include, for example, a primary cell which is not rechargeable, a secondary cell which is rechargeable or a fuel cell.

The communication module 890 may support establishment of a direct (e.g., wired) communication channel or a wireless communication channel between the electronic device 801 and the external electronic device (e.g., the electronic device 802, the electronic device 804, or the server 808), and communication over the established communication channel. The communication module 890 may include one or more communication processors operated independently from the processor 820 (e.g., the application processor), and supporting the direct (e.g., wired) communication or the wireless communication. According to an embodiment, the communication module 890 may include a wireless communication module 892 (e.g., a cellular communication module, a short-range wireless communication module, or a GNSS communication module) or a wired communication module 894 (e.g., a local region network (LAN) communication module, or a power line communication module). A corresponding communication module of these communication modules may communicate with the external electronic device 804 via the first network 898 (e.g., a short-range communication network such as Bluetooth, wireless-fidelity (Wi-Fi) direct, or infrared data association (IrDA)) or the second network 899 (e.g., a long-range communication network such as a legacy cellular network, a 5th (5G) network, a next-generation communication network, Internet, or a computer network (e.g., a LAN or a wide area network (WAN)). These various communication modules may be integrated as a single component (e.g., a single chip), or may be implemented as a plurality of separate components (e.g., multiple chips). The wireless communication module 892 may identify and authenticate the electronic device 801 in the communication network such as the first network 898 or the second network 899 using subscriber information (e.g., international mobile subscriber identity (IMSI)) stored in the subscriber identification module 896.

The wireless communication module 892 may support a 5G network after a 4G network and a next-generation communication technology, for example, a new radio (NR) access technology. The NR access technology may support high-speed transmission of high-capacity data (enhanced mobile broadband (eMBB)), minimization of terminal power and connection of multiple terminals (massive machine type communications (mMTC)), or high reliability and low latency (ultra-reliable and low-latency communications (URLLC)). The wireless communication module 892 may support, for example, a high-frequency band (e.g., millimeter waves (mmWave) band), to achieve a high data transmission rate. The wireless communication module 892 may support various technologies for securing performance in the high-frequency band, for example, techniques such as beamforming, massive multiple-input and multiple-output (MIMO), full dimensional (FD)-MIMO, an array antenna, analog beamforming, or a large scale antenna. The wireless communication module 892 may support various requirements specified in the electronic device 801, the external electronic device (e.g., the electronic device 804), or a network system (e.g., the second network 899). According to an embodiment, the wireless communication module 892 may support a peak data rate (e.g., 20 Gbps or more) for realizing the eMBB, loss coverage (e.g., 164 dB or smaller) for realizing the mMTC, or U-plane latency (e.g., 0.5 ms or smaller for each of downlink (DL) and uplink (UL), or 1 ms or smaller for round trip) for realizing the URLLC.

The antenna module 897 may transmit or receive a signal or power to or from the outside (e.g., the external electronic device). According to an embodiment, the antenna module 897 may include an antenna including a radiator formed of a conductor or a conductive pattern formed on a substrate (e.g., a PCB). According to an embodiment, the antenna module 897 may include a plurality of antennas (e.g., array antennas). In this case, at least one antenna appropriate for a communication scheme used in the communication network such as the first network 898 or the second network 899 may be selected, for example, by the communication module 890 from the plurality of the antennas. The signal or the power may be transmitted or received between the communication module 890 and the external electronic device via the at least one antenna selected. According to some embodiment, other component (e.g., a radio frequency integrated circuit (RFIC)) than the radiator may be additionally formed as a part of the antenna module 897.

According to various embodiments, the antenna module 897 may form an mmWave antenna module. According to an embodiment, the mmWave antenna module may include a PCB, an RFIC disposed on or adjacent to a first surface (e.g., a bottom surface) of the PCB and supporting a designated high frequency band (e.g., the mmWave band), and a plurality of antennas (e.g., array antennas) disposed on or adjacent to a second surface (e.g., a top surface or a side surface) of the PCB and transmitting or receiving signals of the designated high frequency band.

At least some of the components may be connected to each other through an inter-peripheral communication scheme (e.g., a bus, general purpose input and output (GPIO), serial peripheral interface (SPI), or mobile industry processor interface (MIPI)) and exchange signals (e.g., commands or data) therebetween.

According to an embodiment, a command or data may be transmitted or received between the electronic device 801 and the external electronic device 804 via the server 808 connected to the second network 899. The external electronic device 802 or 804 may be a device of the same or different type as or from the electronic device 801. According to an embodiment, all or some of operations executed at the electronic device 801 may be carried out at one or more of the external electronic devices 802, 804, or 808. For example, if the electronic device 801 needs to perform a function or a service automatically, or in response to a request from the user or other device, the electronic device 801 may request one or more external electronic devices to perform at least a part of the function or the service, instead of or in addition to executing the function or the service. The one or more external electronic devices receiving the request may perform at least a part of the function or the service requested, or an additional function or service related to the request, and provide a result of the execution to the electronic device 801. The electronic device 801 may provide the result as at least a part of a response to the request, without or with further processing of the result. For doing so, for example, cloud computing, distributed computing, mobile edge computing (MEC), or client-server computing technology may be used. The electronic device 801 may provide an ultra-low delay service using, for example, the distributed computing or the MEC. In an embodiment, the external electronic device 804 may include an Internet of things (IoT) device. The server 808 may be an intelligent server using the machine learning and/or a neural network. According to an embodiment, the external electronic device 804 or the server 808 may be included in the second network 899. The electronic device 801 may be applied to an intelligent service (e.g., smart home, smart city, smart car, or healthcare) based on a 5G communication technology and an IoT-related technology.

The electronic device according to various embodiments disclosed in the disclosure may be a device of various types. The electronic device may include, for example, a portable communication device (e.g., a smartphone), a computer device, a portable multimedia device, a portable medical device, a camera, a wearable device, or a home appliance. The electronic device according to an embodiment of the disclosure is not limited to the devices described above.

It should be appreciated that various embodiments of the disclosure and the terms used therein are not intended to limit technological features disclosed in this document to particular embodiments, and embrace various modifications, equivalents, or alternatives of a corresponding embodiment. With respect to the descriptions of the drawings, similar reference numerals may be used for similar or related elements. A singular form of a noun corresponding to an item may include one or more of the items, unless the relevant context clearly indicates otherwise. As used herein, each of such phrases as "A or B", "at least one of A and B", "at least one of A or B", "A, B, or C", "at least one of A, B, and C", and "at least one of A, B, or C", may include one, or all possible combinations of the items enumerated together in a corresponding one of the phrases. Such terms as "1st" and "2nd", or "first" and "second" may be used to simply distinguish a corresponding component from another, and do not limit the corresponding components in other aspect (e.g., importance or order). If an element (e.g., a first element) is referred to, with or without the term "operatively" or "communicatively", as "coupled" or "connected" to another element (e.g., a second element), it means that the element may be coupled with the other element directly (e.g., wiredly), wirelessly, or via a third element.

The term "module" used in various embodiments of the disclosure may include a unit implemented in hardware, software or firmware, and may be interchangeably used with a term, for example, logic, a logic block, a part, or circuitry. The module may be a single integral component, or a minimum unit or part thereof, for performing one or more functions. For example, according to an embodiment, the module may be implemented in a form of an application-specific integrated circuit (ASIC).

Various embodiments of the disclosure may be implemented as software (e.g., the program 840) including one or more instructions which are stored in a storage medium (e.g., the internal memory 836 or the external memory 838) readable by a machine (e.g., the electronic device 801). For example, a processor (e.g., the processor 820) of the machine (e.g., the electronic device 801) may invoke at least one of the one or more instructions stored in the storage medium, and execute it or them. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Herein, 'non-transitory' simply means that the storage medium is a tangible device, and does not include a signal (e.g., an electromagnetic wave), but this term does not differentiate between a case where data is semi-permanently stored in the storage medium and a case where the data is temporarily stored.

According to an embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read only memory (CD-ROM)), or may be distributed (e.g., downloaded or uploaded) directly or online via an application store (e.g., Play Store^{™}) or between two user devices (e.g., smart phones). In the online distribution, at least a part of the computer program product may be temporarily stored in the machine-readable storage medium such as a memory of a manufacturer's server, an application store server, or a relay server, or may be temporarily generated.

According to various embodiments, each component (e.g., a module or a program) of the above-described components may include a single entity or multiple entities, and some of the multiple entities may be separately deployed in different components. According to various embodiments, one or more components or operations of the above-described components may be omitted, or one or more other components or operations may be added. Alternatively or additionally, a plurality of components (e.g., modules or programs) may be integrated as a single component. In this case, the integrated component may perform one or more functions of each component of the plurality of the components in the same or similar manner as they are performed by a corresponding component of the plurality of the components before the integration. According to various embodiments, operations performed by the module, the program or other component may be carried out sequentially, in parallel, repeatedly, or heuristically, one or more of the operations may be executed in a different order or omitted, or one or more other operations may be added.

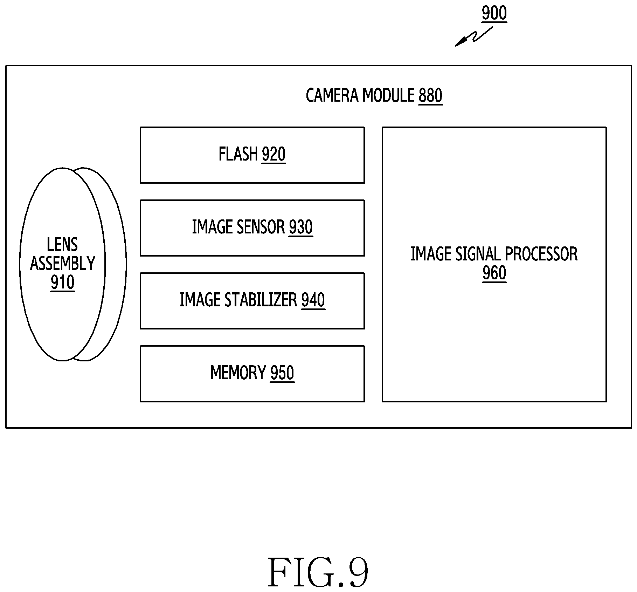

FIG. 9 is a block diagram 900 illustrating a camera module 880 according to various embodiments. Referring to FIG. 9, the camera module 880 may include a lens assembly 910, a flash 920, an image sensor 930, an image stabilizer 940, a memory 950 (e.g., a buffer memory), or an image signal processor 960. The lens assembly 910 may collect light emitted from a subject to be captured for an image. The lens assembly 910 may include one or more lenses. According to an embodiment, the camera module 880 may include a plurality of lens assemblies 910. In this case, the camera module 880 may form, for example, a dual camera, a 360-degree camera, or a spherical camera. Some of the plurality of the lens assemblies 910 may have the same lens properties (e.g., an angle of view, a focal length, autofocus, an f number, or optical zoom), or at least one lens assembly may have one or more lens properties different from the lens properties of the other lens assemblies. The lens assembly 910 may include, for example, a wide angle lens or a tele lens.

The flash 920 may emit light used to enhance the light emitted or reflected from the subject. According to an embodiment, the flash 920 may include one or more light emitting diodes (e.g., a red-green-blue (RGB) light emitting diode (LED), a white LED, an infrared LED, or an ultraviolet LED), or a xenon lamp. The image sensor 930 may convert the light emitted or reflected from the subject and transmitted through the lens assembly 910 into an electrical signal, and thus acquire an image corresponding to the subject. According to an embodiment, the image sensor 930 may include one image sensor selected from image sensors having different properties, for example, an RGB sensor, a black and white (BW) sensor, an IR sensor, or an ultraviolet (UV) sensor, a plurality of image sensors having the same properties, or a plurality of image sensors having different properties. The image sensors included in the image sensor 930 each may be implemented using, for example, a CCD sensor or a CMOS sensor.

The image stabilizer 940 may, in response to a movement of the camera module 880 or the electronic device (e.g., the electronic device 801 of FIG. 9) including the same, move at least one lens or the image sensor 930 included in the lens assembly in a specific direction or control an operational attribute of the image sensor 930 (e.g., adjust a read-out timing). This allows to compensate for at least a part of a negative effect by the movement on the captured image. According to an embodiment, the image stabilizer 940 may detect such a movement of the camera module 880 or the electronic device 801 using a gyro sensor (not shown) or an acceleration sensor (not shown) disposed inside or outside the camera module 880, according to an embodiment. According to an embodiment, the image stabilizer 940 may be implemented with, for example, an optical image stabilizer. The memory 950 may at least temporarily store at least a part of the image obtained through the image sensor 930 for a subsequent image processing task. For example, if the image acquisition is delayed due to shutter lag or multiple images are captured quickly, a raw image acquired (e.g., a Bayer-patterned image or a high-resolution image) may be stored in the memory 950, and its corresponding copy image (e.g., a low-resolution image) may be previewed through the display module 860. Next, if a designated condition is satisfied (e.g., a user input or a system command), at least a part of the raw image stored in the memory 950 may be obtained and processed, for example, by the image signal processor 960. According to an embodiment, the memory 950 may be configured as at least a part of the memory 950, or as a separate memory operated independently.

The image signal processor 960 may perform one or more image processing on an image obtained through the image sensor 930 or an image stored in the memory 950. The one or more image processing may include, for example, depth map generation, 3D modeling, panorama generation, feature point extraction, image synthesizing, or image compensation (e.g., noise reduction, resolution adjustment, brightness adjustment, blurring, sharpening, or softening). Additionally or alternatively, the image signal processor 960 may control (e.g., control exposure time, or control read-out timing) at least one (e.g., the image sensor 930) of the components included in the camera module 880. The image processed by the image signal processor 960 may be stored back in the memory 950 for further processing, or may be provided to an external component (e.g., the memory 830, the display module 860, the electronic device 802, the electronic device 804, or the server 808) of the camera module 880. According to an embodiment, the image signal processor 960 may be configured as at least a part of the processor 820, or as a separate processor operated independently from the processor 820. If the image signal processor 960 is configured as the separate processor from the processor 820, at least one image processed by the image signal processor 960 may be displayed on the display module 860 as it is or after further image processing by the processor 820.

According to an embodiment, the electronic device 801 may include a plurality of camera modules 880 each having different properties or capabilities. In this case, for example, at least one of the plurality of the camera modules 880 may be a wide camera, and at least another one may be a tele camera. Similarly, at least one of the plurality of the camera modules 880 may be a front camera, and at least another one may be a rear camera.

## Claims

1. A camera module comprising:
an image sensor;
an optical image stabilization (OIS) carrier coupled to the image sensor to move the image sensor on a plane perpendicular to an optical axis;
a housing accommodating the image sensor and the OIS carrier;
an OIS magnet fixed to a first side of the OIS carrier;
a first OIS coil and a second OIS coil fixed to a first inner surface of the housing to face the OIS magnet, the first OIS coil and the second OIS coil disposed side by side on the first inner surface along a direction perpendicular to the optical axis; and
a driving circuit electrically connected to the first OIS coil and the second OIS coil,
wherein the driving circuit controls a first current applied to the first OIS coil and a second current applied to the second OIS coil:
to perform OIS by moving the image sensor in a direction perpendicular to the optical axis, and
to perform roll rotation correction of the image sensor by rotating the image sensor on a plane perpendicular to the optical axis.

2. The camera module of claim 1, wherein the OIS magnet comprises a first OIS magnet and a second OIS magnet,
wherein the first OIS coil faces the first OIS magnet, and
wherein the second OIS coil faces the second OIS magnet.

3. The camera module of claim 2, wherein the first OIS magnet and the second OIS magnet correspond to the same polarity, and
wherein the driving circuit:
performs the OIS by controlling the first current and the second current to point the same direction, and
performs the roll rotation correction by controlling the first current and the second current to point opposite directions.

4. The camera module of claim 2, wherein the first OIS magnet and the second OIS magnet correspond to different polarities, and
wherein the driving circuit:
performs the OIS by controlling the first current and the second current to point opposite directions, and
performs the roll rotation correction by controlling the first current and the second current to point the same direction.

5. The camera module of claim 1, further comprising:
a first OIS position sensor disposed around the first OIS coil; and
a second OIS position sensor disposed around the second OIS coil,
wherein the driving circuit identifies a position of the image sensor through at least a part of a first sensing value of the first OIS position sensor and a second sensing value of the second OIS position sensor.

6. The camera module of claim 5, wherein the driving circuit performs the OIS using at least one of a sum value of the first sensing value and the second sensing value, or an average value of the first sensing value and the second sensing value.

7. The camera module of claim 5, wherein the driving circuit performs the roll rotation correction using a difference value between the first sensing value and the second sensing value.

8. The camera module of claim 1, further comprising:
an auto focus (AF) carrier for accommodating the OIS carrier and received in the housing;
an AF magnet fixed to a side of the AF carrier; and
an AF coil fixed to a second inner surface of the housing to face the AF magnet,
wherein the driving circuit performs AF by controlling a current applied to the AF coil to move the image sensor in a direction parallel to the optical axis.

9. The camera module of claim 1, wherein the optical axis is a first optical axis, further comprising:
a first reflector for changing light incident on the camera module into a second optical axis substantially perpendicular to the first optical axis, to be substantially parallel to the first optical axis; and
a second reflector for changing the light changed into the second optical axis to the first optical axis.

10. The camera module of claim 9, wherein the first reflector and the second reflector are secured to the housing.
